# EUROPEAN PATENT APPLICATION

(11) **EP 3 996 438 A1**
(43) Date of publication of application: **11.05.2022**
(21) Application number: 19937214.5
(22) Date of filing: 05.07.2019
(51) Int. Cl.: H04W 72/04

(54) **TERMINAL**

(71) Applicant: NTT DOCOMO, INC., Chiyoda-Ku Tokyo 100-6150 (JP)
(72) Inventor: HARADA Hiroki, Tokyo 100-6150 (JP); NAGATA Satoshi, Tokyo 100-6150 (JP); TAKEDA Daiki, Tokyo 100-6150 (JP); WANG Jing, Beijing 100190 (CN)
(74) Representative: Hoffmann Eitle
(86) International application number: PCT/JP2019/026888
(87) International publication number: WO 2021/005663

(57) **Abstract**

The terminal applies, when using a different frequency band such as FR4 that is different from the frequency band including FR1 and FR2, a wider PDCCH monitoring opportunity interval than when using the frequency band and receives the PDCCH in the monitoring opportunity.

## Description

### TECHNICAL FIELD

The present invention relates to a terminal that performs radio communication, and particularly, relates to a terminal that acquires system information.

### BACKGROUND ART

The 3rd Generation Partnership Project (3GPP) specifies Long Term Evolution (LTE), and with the aim of further speeding, specifies LTE-Advanced (hereinbelow, the LTE includes the LTE-Advanced). In the 3GPP, specifications for 5th generation mobile communication system (5G, also called as New Radio (NR) or Next Generation (NG)) are also being considered.

In Release 15 and Release 16 (NR) of the 3GPP, the operation of the bands including FR1 (410 MHz to 7.125 GHz) and FR2 (24.25 GHz to 52.6 GHz) is specified. In addition, in the specifications after Release 16, operation in a band exceeding 52.6 GHz has been studied (see Non-Patent Document 1). The target frequency range in Study Item (SI) is 52.6 GHz to 114.25 GHz.

When the carrier frequency is very high, an increase in phase noise and propagation loss becomes a problem. It is also more sensitive to peak-to-average power ratio (PAPR) and power amplifier nonlinearity.

Considering such problems, when using a different frequency band different from FR1/FR2, such as high frequency band exceeding 52.6GHz, one option is to change the monitoring opportunity (MO) period of PDCCH, it is conceivable to change a transmission period (Periodicity) for initial access of SSB (SS/PBCH Block) composed of synchronization signal (SS: Synchronization Signal) and downlink physical broadcast channel (PBCH: Physical Broadcast CHannel), and PDCCH (Physical Downlink Control Channel)), specifically, a period of Type 0 PDCCH monitoring opportunity (MO) for system information block (SIB) decoding.

In addition, it is conceivable to change a bandwidth (number of resource blocks (RB)) of CORESET (control resource sets: control resource set) (may be called CORESET #0) for TypeO-PDCCH Common Search Space (CSS) set and the number of symbols, and further, it is conceivable to change an association rule between the SSB and the Type 0 PDCCH MO.

### PRIOR ART DOCUMENT

### NON-PATENT DOCUMENT

Non-Patent Document 1: 3GPP TR 38.807 V0.1.0, 3rd Generation Partnership Project; Technical Specification Group Radio Access Network; Study on requirements for NR beyond 52.6 GHz (Release 16), 3GPP, March 2019

### SUMMARY OF THE INVENTION

However, when using a different frequency band different from FR1/FR2 as described above, the following problems can arise.

Specifically, particularly, when supporting NR stand-alone (SA) operation, it may not be appropriate to apply the existing settings defined in 3GPP Release 15 or the like to different frequency bands as they are. For example, when Discrete Fourier Transform-Spread OFDM (DFT-S-OFDM) is used, the number of symbols of CORESET (CORESET #0) for TypeO-PDCCH CSS may not be sufficient.

The present invention has been made in view of the above discussion. One object of the present invention is to provide a terminal, that can, even when using a different frequency band different from FR1/FR2, apply an appropriate control resource set or common search space used for acquiring system information.

According to one aspect of the present disclosure a terminal (UE 200) includes a control unit (control unit 270) that applies, when using a different frequency band (e.g., FR4) different from a certain frequency band including one or a plurality of frequency ranges (FR1, FR2), a larger number of symbols to a control resource set than when using the certain frequency band; and a receiving unit (control signal/reference signal processing unit 240) that receives system information by using the control resource set.

According to another aspect of the present disclosure a terminal (UE 200) includes a control unit (control unit 270) that applies, when using a different frequency band (e.g., FR4) different from a certain frequency band including one or a plurality of frequency ranges (FR1, FR2), a smaller or larger number of resource blocks to a control resource set than when using the certain frequency band; and a receiving unit (control signal/reference signal processing unit 240) that receives system information by using the control resource set.

According to still another aspect of the present disclosure a terminal (UE 200) includes a control unit (control unit 270) that applies, when using a different frequency band (e.g., FR4) different from a certain frequency band (FR1, FR2) including one or a plurality of frequency ranges, a wider monitoring opportunity interval of a downlink control channel than when using the certain frequency band; and a receiving unit (control signal/reference signal processing unit 240) that receives the downlink control channel in the monitoring opportunity.

According to still another aspect of the present disclosure a terminal (UE 200) includes a control unit (control unit 270) that applies, when using a different frequency band (e.g., FR4) different from a certain frequency band (FR1, FR2) including one or a plurality of frequency ranges, a limited multiplexing pattern of a control resource set than when using the certain frequency band; and a receiving unit (control signal/reference signal processing unit 240) that receives system information by using the control resource set.

### BRIEF DESCRIPTION OF DRAWINGS

FIG. 1 is an overall schematic configuration diagram of a radio communication system 10.
FIG. 2 is a diagram showing a frequency range used in the radio communication system 10.
FIG. 3A is a diagram illustrating a configuration example of a radio frame, a subframes, and slots used in the radio communication system 10.
FIG. 3B is a diagram illustrating a configuration example of a control resource set (CORESET) used in the radio communication system 10.
FIG. 4 is a diagram showing an example (part 1) of a multiplexing pattern (Multiplexing pattern = 1) when 120 kHz SCS is used for data and 240 kHz SCS is used for SSB.
FIG. 5 is a diagram showing an example (part 2) of a multiplexing pattern (Multiplexing pattern = 1) when 120 kHz SCS is used for data and 240 kHz SCS is used for SSB.
FIG. 6 is a diagram illustrating an example of a multiplexing pattern (Multiplexing pattern = 2) when 120 kHz SCS is used for data and 240 kHz SCS is used for SSB.
FIG. 7 is a diagram illustrating an example of a multiplexing pattern (Multiplexing pattern = 3) when 120 kHz SCS is used for data and 120 kHz SCS is used for SSB.
FIG. 8 is a functional block diagram of UE 200.
FIG. 9 is a diagram illustrating an arrangement example of Type 0 PDCCH corresponding to Example 1 of Operation Example 3.
FIG. 10 is a diagram illustrating an arrangement example of SSB and Type 0 PDCCH corresponding to Example 3 of Operation Example 4.
FIG. 11 is a diagram illustrating an example of hardware configuration of the UE 200.

### MODES FOR CARRYING OUT THE INVENTION

Exemplary embodiments of the present invention are explained below with reference to the accompanying drawings. Note that, the same or similar reference numerals have been attached to the same functions and configurations, and the description thereof is appropriately omitted.

### (1) Overall Schematic Configuration of Radio Communication System

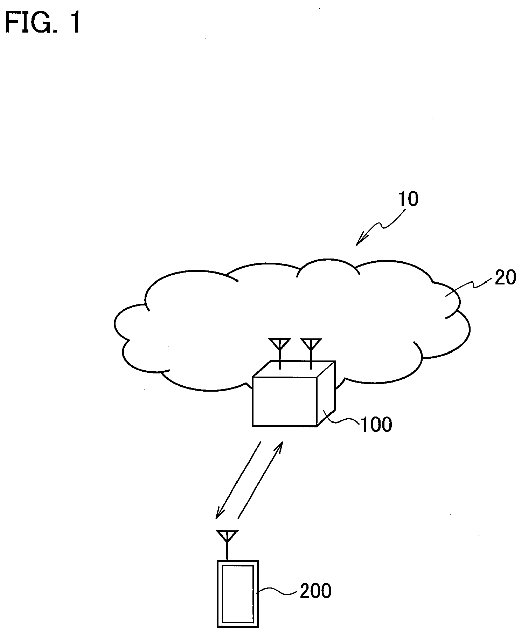

FIG. 1 is an overall schematic configuration diagram of a radio communication system 10 according to the present embodiment. The radio communication system 10 is a radio communication system according to 5G New Radio (NR). The radio communication system 10 includes Next Generation-Radio Access Network 20 (hereinafter, "NG-RAN 20") and a terminal 200 (hereinafter, "UE 200", User Equipment).

The NG-RAN 20 includes a radio base station 100 (hereinafter, "gNB 100"). A concrete configuration of the radio communication system 10, including the number of the gNBs and the UEs, is not limited to the example shown in FIG. 1.

The NG-RAN 20 actually includes a plurality of NG-RAN Nodes, in particular, the gNB (or ng-eNB). Also, the NG-RAN 20 is connected to a core network (5GC, not shown) according to the 5G. The NG-RAN 20 and the 5GC may be simply expressed as "network".

The gNB 100 is a radio base station according to the 5G. The gNB 100 performs a radio communication with the UE 200 according to the 5G. The gNB 100 and the UE 200 can handle, by controlling a radio signal transmitted from a plurality of antenna elements, Massive MIMO (Multiple-Input Multiple-Output) that generates a beam with a higher directivity, carrier aggregation (CA) that bundles a plurality of component carriers (CC) to use, dual connectivity (DC) in which communication is performed simultaneously between two NG-RAN Nodes and the UE, and the like.

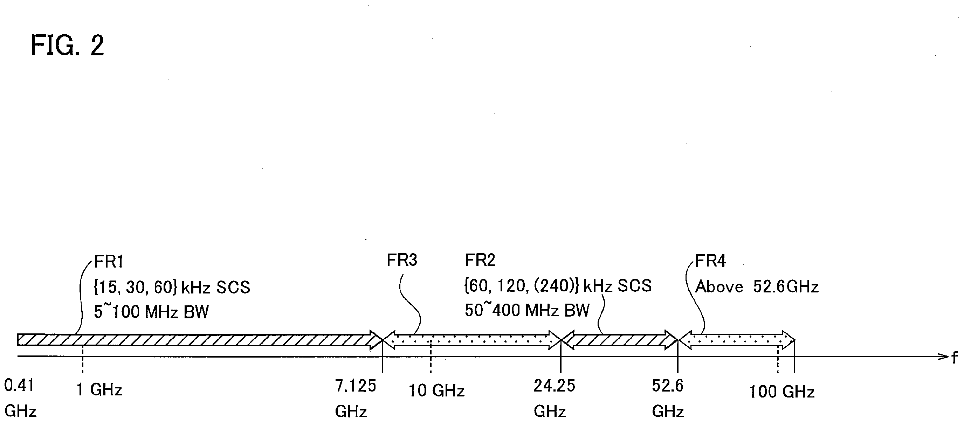

The radio communication system 10 corresponds to a plurality of frequency ranges (FR). FIG. 2 shows the frequency range used in the radio communication system 10.

As shown in FIG. 2, the radio communication system 10 corresponds to FR1 and FR2. The frequency band of each FR is as below.

- FR1: 410 MHz to 7.125 GHz
- FR2: 24.25 GHz to 52.6 GHz

In FR1, 15 kHz, 30 kHz, or 60 kHz Sub-Carrier Spacing (SCS) is used, and a bandwidth (BW) of 5 MHz to 100 MHz is used. FR2 has a higher frequency than FR1. Moreover, FR2 uses SCS of 60 kHz or 120 kHz (240 kHz may be included), and uses a bandwidth (BW) of 50 MHz to 400 MHz.

Note that SCS may be interpreted as numerology. The numerology is defined in 3GPP TS38.300 and corresponds to one subcarrier spacing in the frequency domain.

Furthermore, the radio communication system 10 can handle to a frequency band that is higher than the frequency band of FR2. Specifically, the radio communication system 10 can handle a frequency band exceeding 52.6 GHz and up to 114.25 GHz. Here, such a high frequency band is referred to as "FR4" for convenience. FR4 belongs to so-called EHF (extremely high frequency, also called millimeter wave). FR4 is a temporary name and may be called by another name.

FR4 may be further classified. For example, FR4 may be divided into a frequency range of 70 GHz or less and a frequency range of 70 GHz or more. Alternatively, FR4 may be divided into more frequency ranges, and may be divided in frequencies other than 70 GHz.

Here, the frequency band between FR2 and FR1 is referred to as "FR3" for convenience. FR3 is a frequency band above 7.125 GHz and below 24.25 GHz.

In the present embodiment, FR3 and FR4 are different from the frequency band including FR1 and FR2, and are called different frequency bands.

Particularly, as described above, in a high frequency band such as FR4, an increase in phase noise between carriers becomes a problem. This may require application of a larger (wider) SCS or a single carrier waveform.

Also, a narrower beam (i.e., a larger number of beams) may be required due to increased propagation loss. In addition, since it is more sensitive to PAPR and power amplifier nonlinearity, a greater (wider) SCS (and/or fewer FFT points), a PAPR reduction mechanism, or a single carrier waveform may be required.

In order to address these issues, in this embodiment, when using a band exceeding 52.6 GHz, Cyclic Prefix-Orthogonal Frequency Division Multiplexing (CP-OFDM)/Discrete Fourier Transform having a larger Sub-Carrier Spacing (SCS) - Spread (DFT-S-OFDM) can be applied.

However, the larger the SCS, the shorter the symbol/Cyclic Prefix (CP) period and the slot period (when the 14 symbol/slot configuration is maintained).

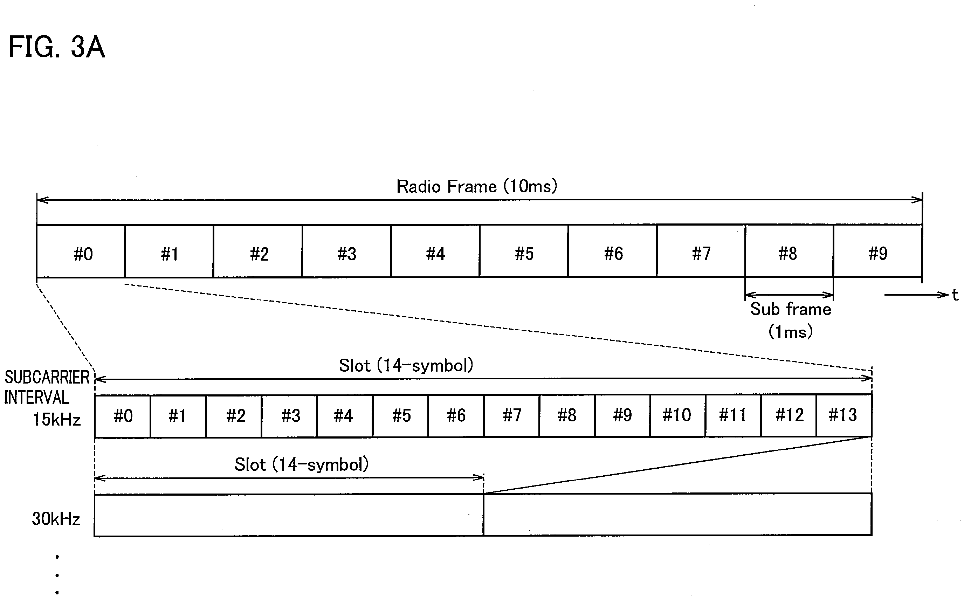

FIG. 3A shows a configuration example of a radio frame, subframes, and slots used in the radio communication system 10. Table 1 shows the relationship between the SCS and the symbol period.

**Table 1**

| | | | | | | | |
|---|---|---|---|---|---|---|---|
| SCS | 15 kHz | 30 kHz | 60 kHz | 120 kHz | 240 kHz | 480 kHz | 960 kHz |
| Symbol Period (Unit: µs | 66.6 | 33.3 | 16.65 | 8.325 | 4.1625 | 2.08125 | 1.040625 |

As shown in Table 1, when the 14 symbol/slot configuration is maintained, the symbol period (and slot period) becomes shorter as the SCS becomes larger (wider).

In the present embodiment, even when the SCS is increased in this way, a mechanism capable of suppressing an increase in cost, complexity, and power consumption of the UE 200 is provided.

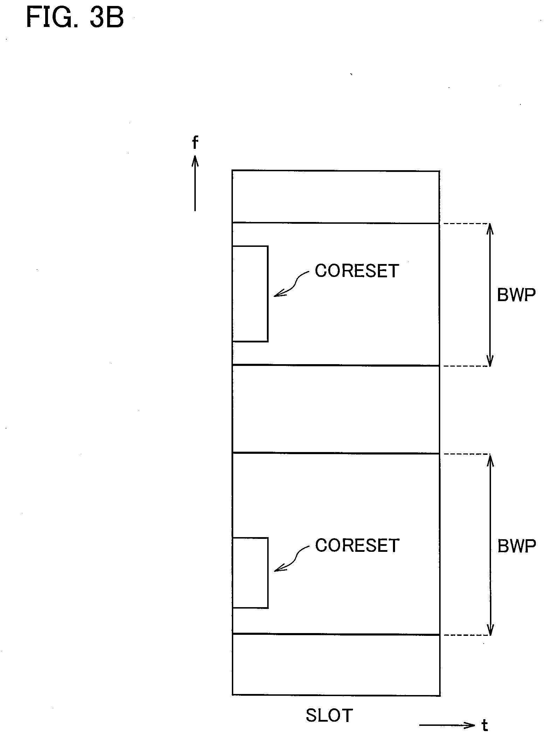

FIG. 3B shows a configuration example of a control resource set (CORESET) used in the radio communication system 10.

As shown in FIG. 3B, CORESET is placed in an active BWP (Bandwidth part). CORESET in the frequency direction (may be called frequency domain) is constituted by multiple resource blocks (RBs), and in the time direction (which may be called the time domain) it is constituted by one or more (specifically, two or three) symbols (OFDM symbol) in the slot. CORESET also includes CORESET #0 for TypeO-PDCCH CSS. CORESET may be called by a term other than control resource set, for example, simply a resource set, or may be called a time/frequency resource, a resource set provided by MIB, or the like. Further, CORESET #0 may be called by a term a first control resource set, an initial control resource set, or the like.

One or a plurality of common search spaces (CSS) may be set, and a corresponding CORESET may be associated with each common search space.

CORESET may include the following parameters:
- Resource element: This is a minimum unit of a resource grid composed of one subcarrier in the frequency domain and one OFDM symbol in the time domain.
- Resource element group (REG): Consists of one resource block (12 resource elements in the frequency domain) and one OFDM symbol in the time domain.
- REG bundle: Consists of multiple REGs.
- Control channel element (CCE): Consists of multiple REGs. The number of REG bundles in CCE can vary.
- Aggregation level: Indicates the number of CCEs assigned to PDCCH.

In addition, frequency domain and time domain parameters (N_{RB}^CORESET, N_{symb}^CORESET) can be specified by radio resource control layer (RRC) signaling.

There are two types of search spaces (which may be called search spaces): "UE-specific search space" and "common search space" (CSS).

The common search space can be considered as a search space required by all UEs for searching a signal for all such terminals (e.g. PDCCH for System Information Block (SIB)) or signaling messages that apply to all before a dedicated channel is established (e.g. during random access procedure).

TypeO-PDCCH CSS is a subset of a dedicated PDCCH search space for acquiring SI messages (SIB), specifically, transmitting PDCCH for decoding of SI messages.

When it is determined that TypeO-PDCCH CSS control resource set (CORESET #0) exists, the UE 200 determines the number of consecutive resource blocks and the number of consecutive symbols in the control resource set of Type 0 PDCCH.

Specifically, as shown in Tables 13-1 to 13-10 described in 3GPP TS38.213 v15/13 chapter (that is, Release 15 of 3GPP), the number of consecutive resource blocks and number of consecutive symbols of CORESET #0, etc are determined from the four most significant bits (controlResourceSetZero) of pdcch-ConfigSIB1 included in Master Information Block (MIB), and a period and timing of monitoring opportunity (MO) of PDCCH (including Type 0 PDCCH) is determined from the four least significant bits (searchSpaceZero) of pdcch-ConfigSIB1 included in the Master Information Block (MIB).

A setting example of a control resource set for Type 0 PDCCH (hereinafter, "controlResourceSetZero") and TypeO-PDCCH CSS (hereinafter, "searchSpaceZero") when FR2 is used will be described below.

For example, when 120 kHz SCS is used for data and 240 kHz SCS is used for SSB, Table 1 and Table 2 can be used. Tables 1 and 2 are the same as Tables 13-10 and 13-12 of 3GPP TS38.213.

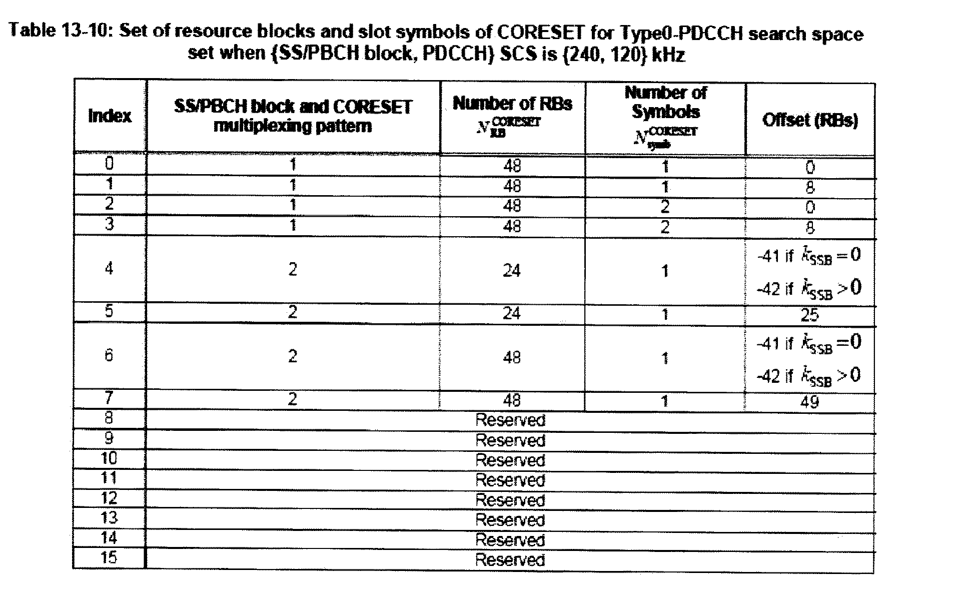

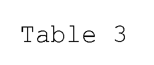

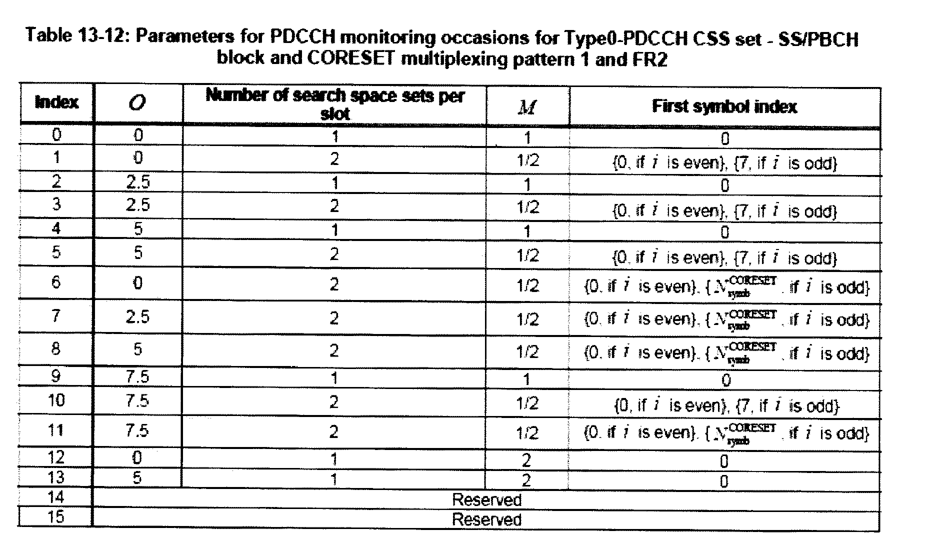

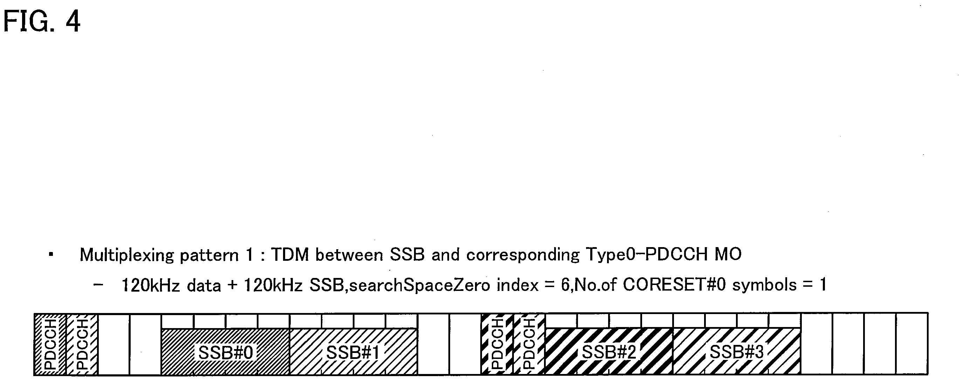

FIG. 4 shows an example (part 1) of a multiplexing pattern (Multiplexing pattern = 1) when 120 kHz SCS is used for data and 240 kHz SCS is used for SSB. In the example shown in FIG. 4, a case has been shown in which an index of controlResourceSetZero (for example, "0") is selected (see Table 1) so that the number of CORESET #0 symbols (N_{symb}^CORESET) is "1" (see Table 1), and a searchSpaceZero index (for example, "6") is selected (see Table 2) so that the number of search space sets per slot is assumed to be "2" and SSB and TypeO-PDCCH can exist in the same slot Indicates.

As shown in Table 1, when the index of controlResourceSetZero is "0", "1" is selected as the multiplexing pattern. Further, as shown in Table 2, when the index of searchSpaceZero in the case of Multiplexing pattern = 1 is "6", the number of common search spaces in the slot (14 symbols) is "2". Note that "O" in Table 2 indicates an offset amount from the transmission reference position of Type 0 PDCCH.

In the example shown in FIG. 4, two PDCCH MOs and two SSBs (SS/PBCH Blocks) are arranged (multiplexed) in a time division manner in a slot.

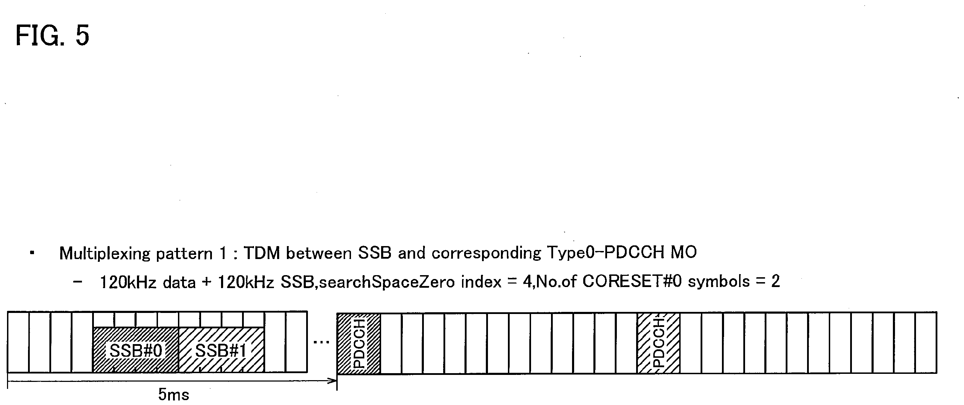

FIG. 5 shows an example (part 2) of a multiplexing pattern (Multiplexing pattern = 1) when 120 kHz SCS is used for data and 240 kHz SCS is used for SSB. In the example shown in FIG. 5, a case is shown in which an index of controlResourceSetZero (for example, "2") such that N_{symb}^CORESET is "2" is selected (see Table 1), and a searchSpaceZero index (e.g., "4") is selected (see Table 2) where the number of search space sets per slot is assumed to be "1" and SSB and Type 0 PDCCH may exist in different slots (see Table 2).

In the example shown in FIG. 5, two SSBs are arranged in a slot in a time division manner, and one PDCCH MO per slot is arranged (multiplexed) in a different slot in a time division manner.

Further, instead of Table 2, Table 3 can be used. Table 3 is used when Multiplexing pattern = 2 is selected in Table 1. Table 3 is the same as Table 13-14 of 3GPP TS38.213.

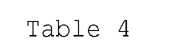

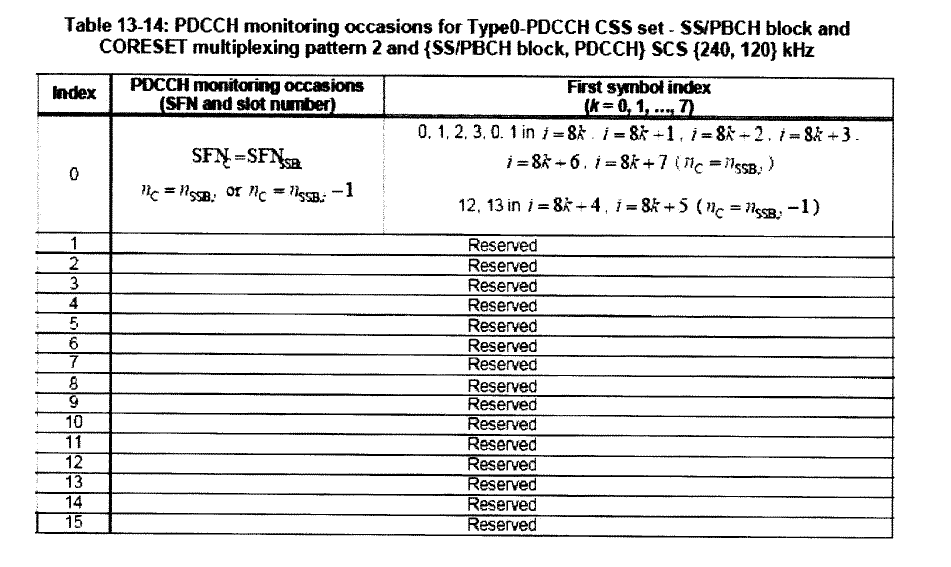

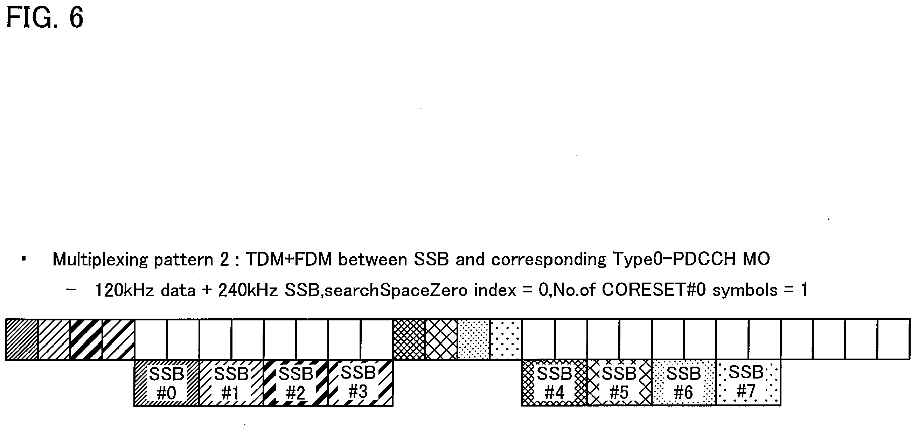

FIG. 6 shows an example of a multiplexing pattern (Multiplexing pattern = 2) when 120 kHz SCS is used for data and 240 kHz SCS is used for SSB. The example shown in FIG. 6 shows a case in which an index of controlResourceSetZero (for example, "6") is selected so that Multiplexing pattern = 2 (see Table 1), and "0" is selected for the index of searchSpaceZero (see Table 3).

In the example shown in FIG. 6, four SSBs are continuously allocated (multiplexed) in the slot in time division, and the four Type 0 PDCCH MOs are allocated in time division (multiplexed) to a frequency resource different from SSB.)

Further, when 120 kHz SCS is used for data and 120 kHz SCS is used for SSB, Tables 4 and 5 can be used. Tables 4 and 5 reproduce Tables 13-8 and 13-15 of 3GPP TS38.213.

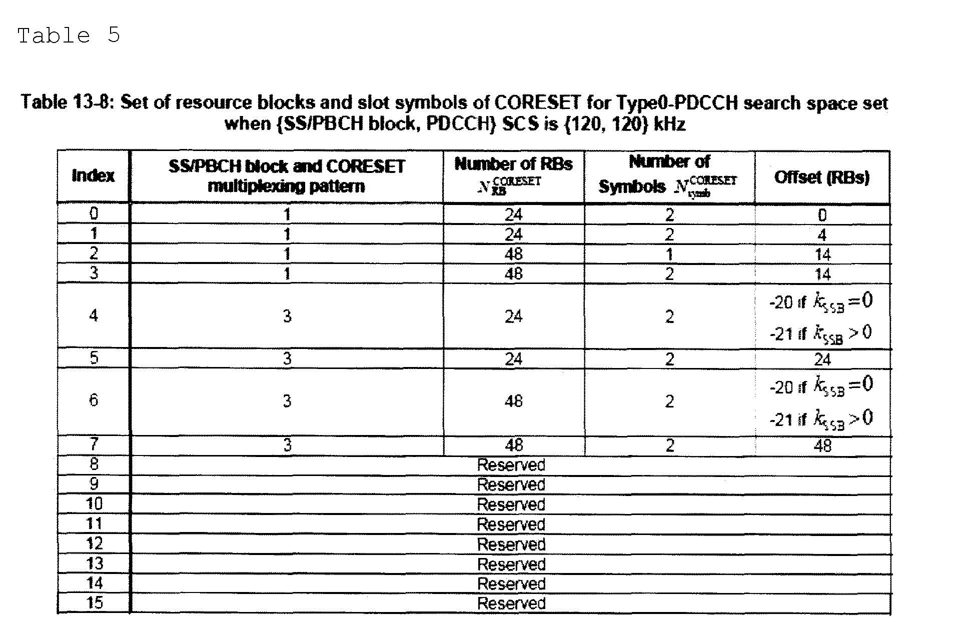

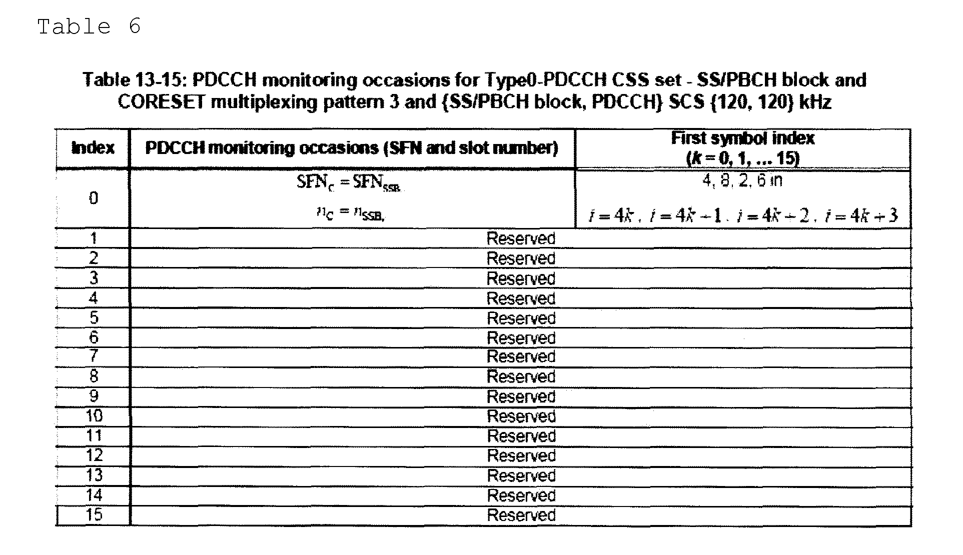

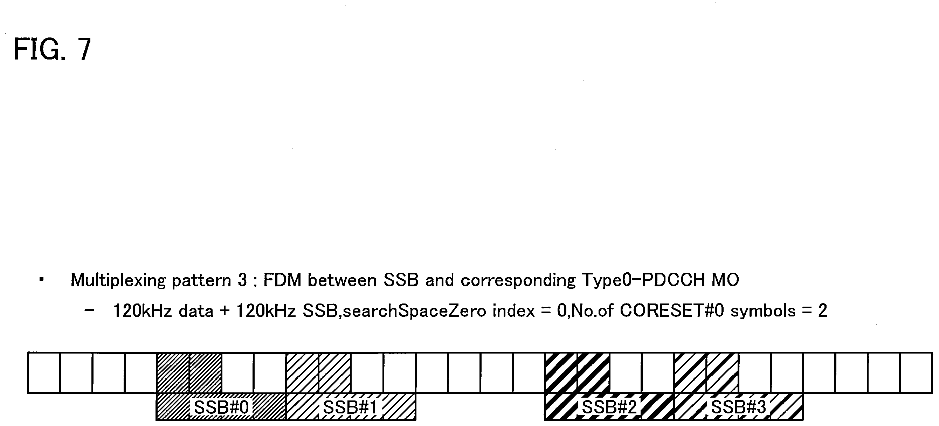

FIG. 7 shows an example of a multiplexing pattern (Multiplexing pattern = 3) when 120 kHz SCS is used for data and 120 kHz SCS is used for SSB. The example shown in FIG. 7 shows a case in which the index of controlResourceSetZero (for example, "4") such that Multiplexing pattern = 3 is selected (see Table 4), and "0" is selected for the index of searchSpaceZero (see Table 5).

In the example shown in FIG. 7, two SSBs are continuously allocated (multiplexed) in a slot in a time-division manner, and the corresponding two Type 0 PDCCH MOs are allocated in frequency division with the corresponding SSB (Multiple).

In the present embodiment, when using FR3 or FR4, considering the increase in phase noise and propagation loss, and more sensitiveness to peak-to-average power ratio (PAPR) and power amplifier nonlinearity, it is possible to change the above-mentioned searchSpaceZero and/or controlResourceSetZero. Specifically, the periodicity of SSB (for initial access) and the periodicity of MO of Type 0 PDCCH can be changed.

Alternatively, the bandwidth (RB) of CORESET #0 and the number of symbols can be changed. Furthermore, the association rule between SSB and Type 0 PDCCH MO can be changed.

### (2) Functional Block Configuration of Radio Communication System

Next, a functional block configuration of the radio communication system 10 will be described. Specifically, the functional block configuration of the UE 200 will be described.

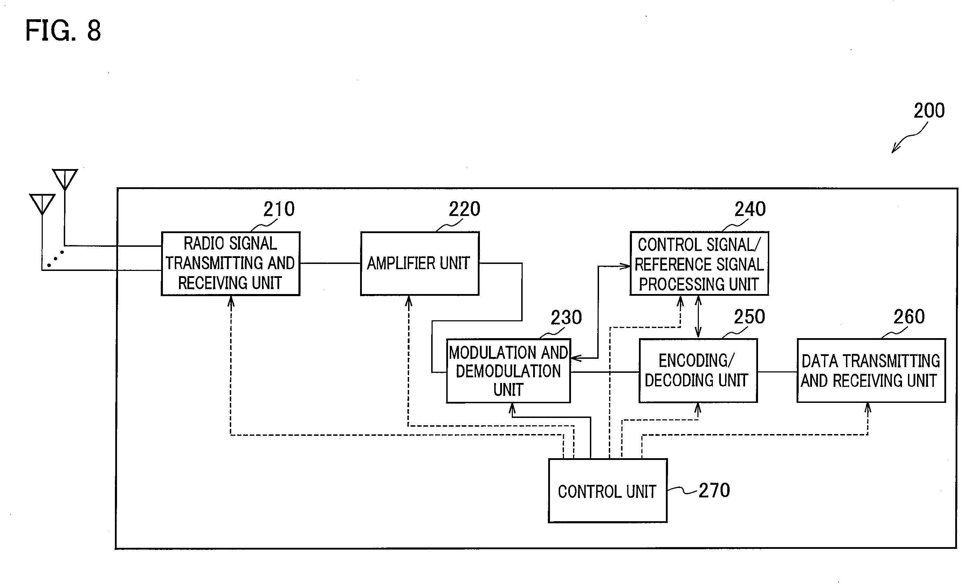

FIG. 8 is a functional block diagram of the UE 200. As shown in FIG. 8, the UE 200 includes a radio signal transmitting and receiving unit 210, an amplifier unit 220, a modulation and demodulation unit 230, a control signal/reference signal processing unit 240, an encoding/decoding unit 250, a data transmitting and receiving unit 260, and a control unit 270.

The radio signal transmitting and receiving unit 210 transmits/receives a radio signal according to NR. The radio signal transmitting and receiving unit 210 corresponds to Massive MIMO, CA that bundles a plurality of CCs, and DC that performs communication simultaneously between the UE and each of the two NG-RAN Nodes.

Further, the radio signal transmitting and receiving unit 210 may transmit/receive a radio signal using a slot having a larger number of symbols than when FR1 or FR2 is used. Note that the number of symbols is specifically the number of OFDM symbols constituting the slot shown in FIG. 3.

For example, the radio signal transmitting and receiving unit 210 can transmit and receive a radio signal by using a slot having a 28 symbol/slot configuration.

The amplifier unit 220 includes a Power Amplifier (PA)/Low Noise Amplifier (LNA) or the like. The amplifier unit 220 amplifies the signal output from the modulation and demodulation unit 230 to a predetermined power level. The amplifier unit 220 amplifies the RF signal output from the radio signal transmitting and receiving unit 210.

The modulation and demodulation unit 230 executes data modulation/demodulation, transmission power setting, resource block allocation, and the like for each predetermined communication destination (gNB 100 or other gNB) .

In the present embodiment, this Cyclic Prefix-Orthogonal Frequency Division Multiplexing (CP-OFDM)/Discrete Fourier Transform-Spread OFDM (DFT-S-OFDM) can be applied. Also, in the present embodiment, DFT-S-OFDM can be used not only for uplink (UL) but also for downlink (DL) .

The control signal/reference signal processing unit 240 executes processing related to various control signals transmitted/received by the UE 200 and processing related to various reference signals transmitted/received by the UE 200.

Specifically, the control signal/reference signal processing unit 240 receives various control signals transmitted from the gNB 100 via a predetermined control channel, for example, a control signal of the radio resource control layer (RRC). The control signal/reference signal processing unit 240 transmits various control signals to the gNB 100 via a predetermined control channel.

The control signal/reference signal processing unit 240 executes processing by using reference signals (RS) such as demodulation reference signal (DMRS) and phase tracking reference signal (PTRS).

DMRS is a known reference signal (pilot signal) for estimating a fading channel used for data demodulation between a base station specific for a terminal and the terminal. PTRS is a terminal-specific reference signal for the purpose of estimating phase noise which is an issue in the high frequency band.

The reference signal includes, apart from DMRS and PTRS, Channel State Information-Reference Signal (CSI-RS) and Sounding Reference Signal (SRS).

A channel includes a control channel and a data channel. A control channel includes PDCCH (Physical Downlink Control Channel), PUCCH (Physical Uplink Control Channel), RACH (Random Access Channel, Downlink Control Information (DCI) including Random Access Radio Network Temporary Identifier (RA-RNTI)), and Physical Includes Broadcast Channel (PBCH).

A data channel includes PDSCH (Physical Downlink Shared Channel), PUSCH (Physical Downlink Shared Channel), and the like. Data means data transmitted via a data channel.

In the present embodiment, the control signal/reference signal processing unit 240 constitutes a receiving unit that receives system information (SI) by using CORESET (including CORESET #0). Also, the control signal/reference signal processing unit 240 constitutes a receiving unit that receives PDCCH (downlink control channel) in MO (Monitoring Opportunity) of the PDCCH.

Specifically, the control signal/reference signal processing unit 240 acquires CORESET (see FIG. 3B) and search space configuration information, and determines a search space including a PDCCH for scheduling SIB.

More specifically, the control signal/reference signal processing unit 240 acquires controlResourceSetZero and searchSpaceZero, and determines TypeO-PDCCH CSS including Type 0 PDCCH for scheduling SIB. The control signal/reference signal processing unit 240 attempts to receive SIB via PDCCH in Type0 PDCCH MO (see FIGS. 4 to 7) based on the determined Type 0-PDCCH CSS.

The encoding/decoding unit 250 executes data division/concatenation and channel coding/decoding for each predetermined communication destination (gNB 100 or other gNB) .

Specifically, the encoding/decoding unit 250 divides the data output from the data transmitting and receiving unit 260 into pieces of a predetermined size, and performs channel coding on the pieces of the data. The encoding/decoding unit 250 decodes the data output from the modulation and demodulation unit 230 and connects the decoded data.

The data transmitting and receiving unit 260 transmits and receives Protocol Data Unit (PDU) and Service Data Unit (SDU). Specifically, the data transmitting and receiving unit 260 executes PDU/SDU assembly/disassembly and the like in multiple layers (such as medium access control layer (MAC), radio link control layer (RLC), and packet data convergence protocol layer (PDCP)). The data transmitting and receiving unit 260 performs data error correction and retransmission control based on hybrid ARQ (Hybrid automatic repeat request).

The control unit 270 controls each functional block constituting the UE 200. Hereinafter, an outline of the functions of the control unit 270 will be described. Details of the operations of the UE 200 executed by the control unit 270 will be described later.

The control unit 270, when using the different frequency band (e.g., FR3, FR4) different from the frequency band including one or more frequency ranges (e.g., FR1, FR2), can apply a larger number of symbols to CORESET (control resource set) than in the case of using the frequency band. That is, the control unit 270 can use a larger number of symbols (N_{symb}^CORESET) for CORESET #0 when particularly using a high frequency band such as FR4.

Also, when using the different frequency band, the control unit 270 can apply a smaller or larger number of resource blocks to CORESET than when using the frequency band. That is, the control unit 270, particularly, when using a high frequency band such as FR4, may use a smaller or larger number of resource blocks (N_{RBI}^CORESET) for CORESET #0.

Furthermore, when the different frequency band is used, the control unit 270 can apply a wider MO (Monitoring Opportunity) interval of the PDCCH (downlink control channel) than when the frequency band is used. That is, the control unit 270, particularly, when using a high frequency band such as FR4, can use a wider Type 0 PDCCH MO interval (may be expressed as periodicity).

In addition, when using the different frequency band, the control unit 270 can apply a multiplexed pattern of SSB and CORESET (control resource set) that is more limited than when using the frequency band. That is, the control unit 270, particularly, when using a high frequency band such as FR4, can limit the number or content of the multiplexing pattern for CORESET #0 (see Table 2 and the like).

### (3) Operation of Radio Communication System

Next, an operation of the radio communication system 10 will be described. Specifically, an operation performed by the UE 200 when receiving information via PDCCH by using CORESET will be described.

### (3.1) Problems When Using High Frequency Band

When supporting NR stand-alone (SA) operation in a high frequency band such as FR4, it is considered preferable to apply controlResourceSetZero and searchSpaceZero settings for the high frequency band (or frequency range, which is included in the high frequency band).

However, it is considered inappropriate to reuse (at least some) existing settings (3GPP Release 15) from the following viewpoints.
- For example, in the case of PDCCH transmitted using DFT-S-OFDM, the number of symbols (N_{symb}^CORESET) of CORESET #0 may not be sufficient.
- If the SCS is very large, the RB for CORESET #0 may be too large (or too small) (the initial active DL BWP bandwidth may be too wide (or too narrow)).
- Assuming very short symbol periods for large SCSs, beam switching within the CP period can not be performed, and Type 0 PDCCH MOs for different beams may need to be separated by a beam switching gap.
- Assuming that a large number of narrow beams are required, transmission of SSB and Remaining Minimum System Information (RMSI) PDCCH/PDSCH over TDM can cause large beam sweep overhead (i.e., scheduling delay).
- In the case of Multiplexing pattern 2 and 3, since only one index can be used according to the table specified in 3GPP TS38.213 (see Tables 3 and 5), it is not really useful for setting of searchSpaceZero.

### (3.2) Operation Example

In order to solve the problem in the case of using the above-described high frequency band, the UE 200 can operate according to the contents described below.

That is, by defining new controlResourceSetZero and searchSpaceZero settings for a high frequency band such as FR4, the UE 200 can apply useful settings while suppressing overhead.

Hereinafter, the following operation example will be described.

(i) Define a new N_{symb}^CORESET value for CORESET #0
(ii) Define a new N_{RB}^CORESET value for CORESET #0
(iii) Define a new Type 0 PDCCH MO setting that takes into account the "beam switching gap"
(iv) Support only limited SSB and CORESET multiplexing patterns
(v) Change the assignment of some Master Information Block (MIB) bits (for example, 4-bit searchSpaceZero settings) The UE 200 may apply at least one of the above-described operation examples, or may apply a plurality of operation examples simultaneously.

### (3.2.1) Operation Example 1

As explained above, in 3GPP Release 15 (hereinafter, "Release 15"), when using FR1 or FR2, the number of symbols for CORESET #0 (N_{symb}^CORESET) is "1" or "2" (see Tables 1 and 4) (when SCS of SSB and PDCCH is narrow, "3" may be set).

In this operation example, as N_{symb}^CORESET for CORESET #0, a larger number of symbols, for example, a value exceeding "3" (N_{symb}^CORESET > 3) is supported. Note that, N_{symb}^CORESET > 3 is just an example, and it is preferable that N_{symb}^CORESET in the case of using a high frequency band such as FR4 is larger than that in the case of using an existing frequency band such as FR1 and FR2.

Also, in the high frequency band, the small values defined in Release 15, "1", "1" and "2", or "1", "2", and "3" may not be supported.

The setting of N_{symb}^CORESET may depend on the DL waveform setting (for example, CP-OFDM or DFT-S-OFDM) notified by the MIB, or may be defined as a specification for each frequency band. Alternatively, it can depend on SCS of DL notified by MIB regulated as a specification for every frequency band by a notification from MIB.

Also, the usage method of the "dmrs-TypeA-position" bit may be changed. Dmrs-TypeA-position is one of the fields included in the MIB, and indicates the position of the DL and UL (first) DM-RS. Specifically, candidate positions (# 2 or # 3) in FR1 and FR2 may be changed and different candidate positions may be defined. Alternatively, the dmrs-TypeA-position may be used for other different purposes or reserved when using a high frequency band such as FR4.

### (3.2.2) Operation Example 2

As explained above, in Release 15, when using FR1 or FR2, the number of RBs for CORESET #0 (N_{RB}^CORESET) is "24" or "48" (see Tables 1 and 4) (if PDCCH SCS is narrow, in some cases "96" may be set).

In this operation example, as the N_{RB}^CORESET for CORESET #0, a smaller number of RBs, for example, a value less than "24" (N_{RB}^CORESET < 24) is supported. Note that N_{RB}^CORESET < 24 is just an example, and it is sufficient that N_{RB}^CORESET is smaller when a high frequency band such as FR4 is used than when an existing frequency band such as FR1 and FR2 is used.

Further, in the high frequency band, large values defined in Release 15, "96", "48" and "96", or "24", "48", and "96" may not be supported. Thereby, even when the SCS is wide, the sampling rate necessary for the SIB reception processing can be suppressed.

On the other hand, when a high frequency band such as FR4 is used, the RB for CORESET #0 may be too small. In this case, as the N_{RB}^CORESET for CORESET #0, a larger number of RBs, for example, a value exceeding "96" (N_{RB}^CORESET > 96) may be supported. As a result, when the SCS is wide and a wide frequency range can be covered, a state in which only a part of the narrow frequency range is used can be avoided.

Note that, the N_{RB}^CORESET setting may depend on the DL waveform setting (for example, CP-OFDM or DFT-S-OFDM) notified by the MIB, similar to N_{symb}^CORESET described in Operation Example 1, or it may be defined as a specification for each frequency band. Alternatively, it can depend on SCS of DL notified by MIB regulated as a specification for every frequency band by a notification from MIB.

Further, when a single carrier waveform is used for Type 0 PDCCH, the bandwidth of Type 0 PDCCH may be defined in advance as a specification, or may be notified by MIB. In this case, the number of RBs may not be based on RBs. For example, the frequency bandwidth (such as MHz) of the single carrier waveform may be directly indicated, or in the case of code division multiple access (CDMA), the resource amount in the corresponding frequency domain may be indicated by using a spreading factor.

### (3.2.3) Operation Example 3

As explained above, in Release 15, when using FR1 or FR2, two search spaces can be arranged for each slot in searchSpaceZero (see FIG. 4 and the like). However, the first symbol of the second Type 0 PDCCH located in the same slot is arranged adjacent to the last symbol of the first Type 0 PDCCH in the same slot in at least some settings.

In this operation example, the following new Type 0 PDCCH MO is set in consideration of the beam switching gap in the UE 200.

• (Example 1): In searchSpaceZero, in which two common search space sets (CSS sets) are specified per slot, the first symbol of the second Type 0 PDCCH located in the same slot is separated by at least one symbol gap from the last symbol of the first Type 0 PDCCH in the same slot.

### (Example 2): searchSpaceZero supports only one common search space set per slot

By applying such searchSpaceZero settings, the time required for beam switching can be secured, and the UE 200 can detect Type 0 PDCCH more reliably.

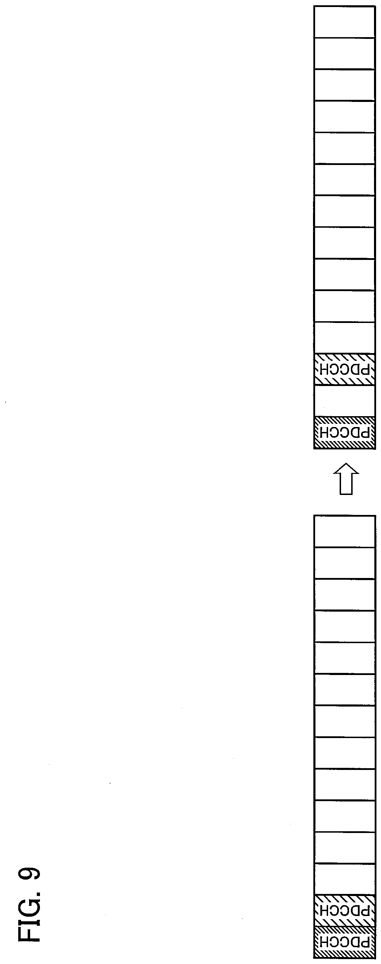

FIG. 9 shows an arrangement example of Type 0 PDCCH corresponding to Example 1 of Operation Example 3. Specifically, the left side of FIG. 9 shows an arrangement example of Type 0 PDCCH according to Release 15, and the right side shows an arrangement example of Type 0 PDCCH according to Example 1 of this operation example.

As shown in FIG. 9, at least one symbol gap is provided between adjacent Type 0 PDCCHs in the time domain. Note that the number of symbol gaps is not limited to one and may be two or more.

### (3.2.4) Operation Example 4

As explained above, in Release 15, Multiplexing pattern = 2, 3 is supported when FR2 is used (see Tables 3 and 5).

In this operation example, application of the Multiplexing pattern is limited. Specifically, application of the multiplexing pattern can be limited as follows.

- (Example 1): Only Multiplexing pattern = 3 is supported regardless of SSB and SCS of CORESET #0.
- (Example 2): Only Multiplexing pattern = 2, 3 is supported.
   Note that, when only Multiplexing pattern = 2, 3 is supported, which one is applied can depend on the DL waveform setting (for example, CP-OFDM or DFT-S-OFDM) notified by MIB, or may be defined as a specification for each frequency band. Alternatively, it may depend on the SCS of the DL that is notified by the MIB or defined as a specification for each frequency band, or may be set by the index of controlResourceSetZero as in the case of FR1/FR2.
- (Example 3): When Multiplexing pattern = 2 is supported, SSB and Type 0 PDCCH corresponding to the SSB are mapped to consecutive symbols. On the other hand, at least one symbol gap is provided between the SSB and SSB different from the SSB.

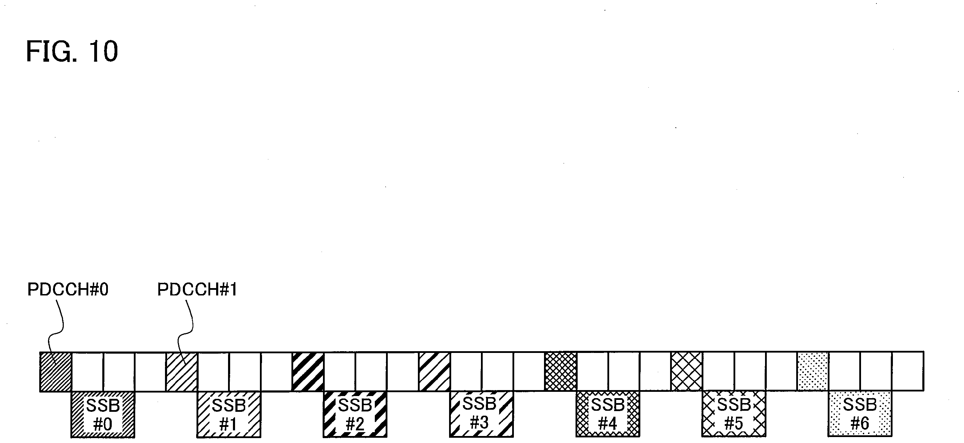

FIG. 10 shows an arrangement example of SSB and Type 0 PDCCH corresponding to Example 3 of Operation Example 4. As shown in FIG. 10, for example, SSB (#0) and Type 0 PDCCH (#0) corresponding to SSB (#0) are mapped to consecutive symbols.

On the other hand, at least one symbol gap is provided between SSB (#0) and SSB (# 1), specifically, Type 0 PDCCH (#1).

### (3.2.5) Operation Example 4'

As explained above, in Release 15, when using FR2, when SCS of SSB is different from SCS of Type 0 PDCCH (particularly, SSB SCS > SCS of PDCCH), Multiplexing pattern = 1, 2 is supported. On the other hand, when the SCS of SSB and the SCS of Type 0 PDCCH are the same, Multiplexing pattern = 1, 3 is supported.

Supporting multiple combinations of such SSB SCS and PDCCH SCS can complicate the implementation of the gNB 100 and the UE 200.

Therefore, in this operation example, only a limited combination of SSB SCS and PDCCH SCS is supported. Specifically, combinations of SSB SCS and PDCCH SCS can be limited as follows.

- (Example 1): Only the same SCS is supported in SSB and Type 0 PDCCH.
- (Example 2): In SSB and Type 0 PDCCH, only the same SCS and {x, x/2} (x = SCS) combinations are supported.
   For example, a combination of a 960 kHz SCS for SSB and 480 kHz SCS for PDCCH is supported. The combination of 960k Hz SCS for SSB and 240 kHz SCS for PDCCH is not supported.
- (Example 3): In SSB and Type 0 PDCCH, only the combination of the same SCS and {x/2, x} (x = SCS) is supported.

For example, a combination of 480 kHz SCS for SSB and 960 kHz SCS for PDCCH is supported. Note that, Example 2 contributes to reducing the beam sweep overhead (that is, scheduling delay) of SSB, and Example 3 makes it possible to select SCS that is resistant to phase noise for PDCCH.

• (Example 4): Only one SCS combination per frequency band is supported.

### (3.2.6) Operation Example 5

As explained above, in the case of Multiplexing pattern 2 and 3, because only one index can be used according to the table specified in 3GPP TS38.213 (see Tables 3 and 5), this does not help in the setting of searchSpaceZero.

Therefore, in this operation example, allocation of some MIB bits (for example, 4-bit searchSpaceZero setting) is changed. Specifically, the allocation of MIB bits can be changed as follows.
- (Example 1): The 4-bit searchSpaceZero setting is used for other purposes.

For example, some bits are used for setting controlResourceSetZero and/or setting the waveform of DL.
- (Example 2): 4-bit searchSpaceZero setting (and some other bits may be included) is deleted from MIB. As a result, the MIB size becomes smaller than the MIB size for FR1 or FR2.
- (Example 3): 1-bit dmrs-TypeA-position is deleted from the MIB or used for other purposes (similar to Operation Example 1).
- (Example 4): The 1-bit "subCarrierSpacingCommon" is deleted from the MIB or used for other purposes.

SubCarrierSpacingCommon indicates subcarrier spacing (SCS) for SIB1 and broadcasted SI messages.

### (4) Advantageous Effects

According to the embodiment described above, the following advantageous effects can be obtained. Specifically, when using a high frequency band such as FR4, the UE 200 can use a larger number of N_{symb}^CORESET than when using a frequency band such as FR1/FR2.

For this reason, even when using a different frequency band different from FR1/FR2, the UE 200 can apply CORESET used to acquire appropriate system information. Thereby, even when using the different frequency band, the UE 200 can apply the setting useful for acquisition of SIB while suppressing an overhead.

Further, when using a high frequency band such as FR4, the UE 200 may use a smaller or larger number of N_{RB}^CORESET than when using a frequency band such as FR1/FR2. Thereby, even when using the different frequency band, the UE 200 can apply the setting useful for acquisition of SIB, suppressing an overhead.

Furthermore, when using a high frequency band such as FR4, the UE 200 can apply Type 0 PDCCH MO that is wider than when using a frequency band such as FR1/FR2.

For this reason, even when using a different frequency band different from FR1/FR2, the UE 200 can apply the Common Search Space (CSS) used for receiving an appropriate Type 0 PDCCH. Thereby, the UE 200 can reliably receive Type 0 PDCCH even when using the different frequency band while suppressing the overhead.

Further, when using a high frequency band such as FR4, the UE 200 can apply a CORESET #0 multiplexing pattern that is more limited than when using a frequency band such as FR1/FR2. Thereby, even when using the different frequency band, the UE 200 can apply the setting useful for acquisition of SIB while suppressing the overhead.

### (5) Other Embodiments

Although the contents of the present invention have been described by way of the embodiments, it is obvious to those skilled in the art that the present invention is not limited to what is written here and that various modifications and improvements thereof are possible.

For example, in the above embodiment, a high frequency band such as FR4, that is, a frequency band exceeding 52.6 GHz has been described as an example; however, it is allowable to apply at least one of the above-described operation examples to other frequency ranges such as FR3.

Furthermore, as explained above, FR4 may be divided into a frequency range of 70 GHz or lower and a frequency range of 70 GHz or higher. FR4 can be applied to the frequency range of 70 GHz or higher (Proposal 1) to (Proposal 3), and the correspondence between the proposal and the frequency range may be changed as appropriate, for example, the proposal can be partially applied to the frequency range.

Moreover, the block diagram used for explaining the embodiments (FIG. 8) shows blocks of functional unit. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as explained above, the realization method is not particularly limited to any one method.

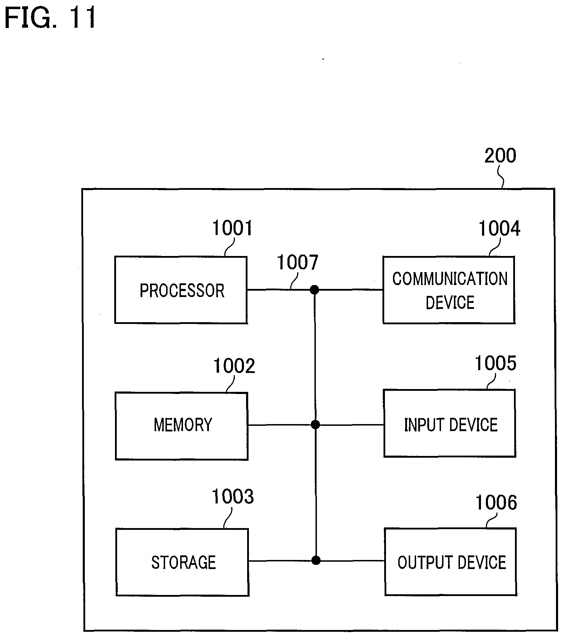

Furthermore, the UE 200 explained above can function as a computer that performs the processing of the radio communication method of the present disclosure. FIG. 11 is a diagram showing an example of a hardware configuration of the UE 200. As shown in FIG. 11, the UE 200 can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

The functional blocks of the UE 200 (see FIG. 8) can be realized by any of hardware elements of the computer device or a desired combination of the hardware elements.

Moreover, the processor 1001 performs computing by loading a predetermined software (computer program) on hardware such as the processor 1001 and the memory 1002, and realizes various functions of the UE 200 by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a computer program (program code), a software module, data, and the like from the storage 1003 and / or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a computer program (computer program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission/reception device) capable of performing communication between computers via a wired and / or wireless network. The communication device 1004 is also called, for example, a network device, a network controller, a network card, a communication module, and the like.

The communication device 1004 includes a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information there among. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, notification information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type) . At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be composed of one or more frames in the time domain. Each frame or frames in the time domain may be referred to as a subframe.

A subframe may be further configured by one or more slots in the time domain. The subframe may have a fixed time length (e.g., 1 ms) that does not depend on the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in a time unit larger than a minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one between a subframe and TTI may be a subframe (1 ms) in existing LTE, or may be shorter than 1 ms (for example, 1 to 13 symbols), or a period longer than 1 ms. Note that, a unit representing TTI may be called a slot, a minislot, or the like instead of a subframe.

Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. Further, the number of slots (the number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the numerology. The number of subcarriers included in the RB may be determined based on the numerology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB : PRB), a subcarrier group (Sub-Carrier Group : SCG), a resource element group (Resource Element Group : REG), PRB pair, RB pair, etc.

A resource block may be configured by one or a plurality of resource elements (Resource Element : RE). For example, one RE may be a radio resource area of one subcarrier and one symbol.

A bandwidth part (BWP) (which may be called a partial bandwidth, etc.) may represent a subset of contiguous common resource blocks (RBs) for a certain numerology in a certain carrier. Here, a common RB may be specified by RB index based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting

(for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10: Radio communication system
- 20: NG-RAN
- 100: gNB
- 200: UE
- 210: Radio signal transmitting and receiving unit
- 220: Amplifier unit
- 230: Modulation and demodulation unit
- 240: Control signal/reference signal processing unit
- 250: Encoding/decoding unit
- 260: Data transmitting and receiving unit
- 270: Control unit
- 1001: Processor
- 1002: Memory
- 1003: Storage
- 1004: Communication device
- 1005: Input device
- 1006: Output device
- 1007: Bus

## Claims

1. A terminal comprising:
a control unit that applies, when using a different frequency band different from a certain frequency band including one or a plurality of frequency ranges, a larger number of symbols to a control resource set than when using the certain frequency band; and
a receiving unit that receives system information by using the control resource set.

2. A terminal comprising:
a control unit that applies, when using a different frequency band different from a certain frequency band including one or a plurality of frequency ranges, a smaller or larger number of resource blocks to a control resource set than when using the certain frequency band; and
a receiving unit that receives system information by using the control resource set.

3. A terminal comprising:
a control unit that applies, when using a different frequency band different from a certain frequency band including one or a plurality of frequency ranges, a wider monitoring opportunity interval of a downlink control channel than when using the certain frequency band; and
a receiving unit that receives the downlink control channel in the monitoring opportunity.

4. A terminal comprising:
a control unit that applies, when using a different frequency band different from a certain frequency band including one or a plurality of frequency ranges, a limited multiplexing pattern of a control resource set than when using the certain frequency band; and
a receiving unit that receives system information by using the control resource set.
